# FASCICULE DE BREVET EUROPEEN

(11) **EP 2 069 657 B1**
(45) Date de publication et mention de la délivrance du brevet: **11.01.2012**
(21) Numéro de dépôt: 07823483.8
(22) Date de dépôt: 07.09.2007
(51) Int. Cl.: F16H 37/04, F16H 3/54, F16H 3/66

(54) **DISPOSITIF DE TRANSMISSION À RAPPORTS MULTIPLES COMPACT**
KOMPAKTE MEHRGANGGETRIEBEVORRICHTUNG
COMPACT MULTIPLE-RATIO TRANSMISSION DEVICE

(30) Priorité: 26.09.2006 WO PCT/FR2006/008432
(43) Date de publication de la demande: 17.06.2009
(73) Titulaire: Antonov Automotive Technologies Limited, Heathcote Industrial Estate Warwick Warwickshire CV34 6LX (GB)
(72) Inventeur: ANTONOV, Roumen, 75006 Paris (FR)
(74) Mandataire: Pelly, Jason Charles
(86) Numéro de dépôt international: PCT/FR2007/001445
(87) Numéro de publication internationale: WO 2008/037864

(56) Documents cités:
- EP-A1- 0 678 689
- EP-A1- 0 710 784
- FR-A1- 2 862 363
- US-A- 2 981 126
- US-A- 4 774 856
- US-A1- 2003 100 395
- US-A1- 2003 199 360

## Description

### Domaine technique

La présente invention concerne un dispositif de transmission à rapports multiples, en particulier du type à engrènement permanent capable de changements de rapport sans rupture de la transmission de puissance. La présente invention vise notamment les boîtes de vitesses à commande automatique ou à commande séquentielle.

### Etat de la technique antérieure

Pour réaliser des boîtes de vitesses automatiques ou à commande séquentielle pour l'automobile, on connaît des boîtes de vitesses réalisées à l'aide de trains planétaires, par exemple des trains épicycloïdaux.

Le document EP 0 434 525 décrit une boîte de vitesses utilisant un ensemble planétaire double, de type épicycloïdal ou de type Ravigneaux, et cinq dispositifs d'accouplements (deux freins et trois embrayages) pour réaliser six rapports plus une marche arrière. Chaque rapport est obtenu en activant conjointement deux des cinq accouplements.

Ce type de boîte de vitesses équipant un certain nombre de véhicules actuels présente toutefois des inconvénients. Ainsi, l'activation conjointe de deux accouplements nécessite une synchronisation de leur commande. Il est difficile de « sauter un rapport », c'est à dire passer d'un rapport à un autre qui ne soit pas le rapport immédiatement inférieur ou immédiatement supérieur. Le dispositif est le plus souvent utilisé en série avec un embrayage ou un convertisseur de couple en amont pour permettre la mise en mouvement progressive du véhicule à partir de l'immobilité.

Le document WO 2005/050060 décrit un dispositif de transmission à cinq rapports plus marche arrière comportant deux trains planétaires montés selon deux axes intermédiaires parallèles. Sur l'arbre d'entrée, un même pignon de transfert menant engrène avec deux pignons de transfert menés situés chacun sur l'un des axes intermédiaires et entraînant chacun l'organe entrant d'un train planétaire.

Chaque train planétaire comprend un embrayage réalisant une prise directe locale, et deux trains épicycloïdaux fournissant chacun un rapport de transmission par blocage d'un de ses éléments à l'aide d'un frein respectif. Les deux trains épicycloïdaux de l'un des trains planétaires comportent chacun au moins une cascade de deux satellites entre la couronne et le planétaire. C'est-à-dire que l'un des satellites engrène avec la couronne, l'autre avec le planétaire, et les deux satellites engrènent l'un avec l'autre. Un rapport de ce train planétaire est un rapport de marche arrière. On réalise donc des prises directes locales en nombre égal à celui des axes intermédiaires et il faut un train épicycloïdal pour chacun des rapports sauf deux, c'est à dire quatre trains épicycloïdaux pour six rapports en tout (cinq en marche avant et un en marche arrière). Pour chaque rapport autre que les prises directes locales, la puissance est transmise par un train épicycloïdal et deux transferts par engrenage.

Ce type de dispositif présente aussi certains inconvénients. Ainsi, l'encombrement du dispositif est important, notamment à cause des deux trains planétaires montés chacun sur un axe intermédiaire.

Le EP-A1-0678689 décrit un dispositif de transmission suivant le préambule de la revendication 1.

Dans ce dispositif connu, le transfert aval comprend une roue dentée menée solidaire de l'organe rotatif aval. Cela impose des contraintes concernant le positionnement des organes rotatifs amont et aval l'un par rapport à l'autre.

L'invention vise à pallier les inconvénients de l'art antérieur ou à en renforcer les avantages, en particulier en améliorant les capacités et performances par rapport aux transmissions actuellement connues.

L'invention vise en particulier l'un au moins des objectifs suivants :
- limiter ou diminuer l'encombrement du dispositif, ou l'adapter à son environnement,
- obtenir un plus grand nombre de rapports,
- obtenir une meilleure souplesse de conception dans le choix des rapports à réaliser,
- simplifier et fiabiliser la sélection et la commande des rapports,
- améliorer la fiabilité et la souplesse du fonctionnement,
- améliorer le rendement de la transmission, ou
- limiter ou diminuer le nombre de pignons ou dentures à réaliser.

En particulier, au regard du EP-A1-0678689, l'invention a pour objectif d'améliorer l'adaptabilité du dispositif à son environnement.

### Exposé de l'invention

Pour cela, l'invention propose un dispositif de transmission à rapports multiples, comprenant :
- un bâti;
- un organe rotatif amont et un organe rotatif aval;
- un premier train planétaire aval et un train planétaire amont non coaxiaux et appartenant à deux trajets de puissance différents entre l'organe rotatif amont et l'organe rotatif aval, le premier train planétaire aval étant monté autour d'un axe d'un premier arbre intermédiaire, le train planétaire amont étant monté autour de l'axe de l'organe rotatif amont;
- un premier transfert par engrenage amont, interposé entre l'organe rotatif amont et le premier train planétaire aval ;
- un transfert par engrenage aval interposé entre le train planétaire amont et l'organe rotatif aval; et
- des moyens d'accouplement sélectif pour faire fonctionner sélectivement chaque train planétaire en prise directe locale ou selon au moins un rapport de transmission différent ;
   le dispositif comprenant en outre entre l'organe rotatif amont et l'organe rotatif aval au moins un troisième trajet de puissance comprenant un deuxième train planétaire aval monté autour d'un axe d'un deuxième arbre intermédiaire différent de ceux du premier train planétaire aval et du train planétaire, le deuxième train planétaire aval étant monté fonctionnellement en série avec un deuxième transfert par engrenage amont définissant entre l'organe rotatif amont et l'organe rotatif aval, lorsque le deuxième train planétaire aval est dans un état de prise directe locale, un rapport de transmission différent de chacun de ceux définis par les deux transferts par engrenage précités lorsque leur train planétaire respectif est en état de prise directe locale, le premier et le deuxième train planétaire aval étant reliés, au moins de façon indirecte, respectivement au premier et au second arbre intermédiaire, les premier et second arbres intermédiaires étant reliés à l'organe rotatif aval par engrènement, et caractérisé en ce que le transfert aval comprend une roue dentée menée solidaire en rotation du premier arbre intermédiaire.

On dit qu'un train planétaire est « amont » lorsqu'il est en amont du transfert par engrenage associé, qui est alors « aval », et que le train planétaire est « aval » lorsqu'il est en aval du transfert par engrenage associé, qui est alors « amont ».

L'invention permet en particulier d'obtenir un grand nombre de rapports tout en limitant l'encombrement et la complexité. En effet, les prises directes des trains planétaires fournissent aisément des rapports de transmission différents.. Le poids, l'encombrement et le coût sont donc aussi diminués. Un dispositif selon l'invention permet de réaliser une boîte de vitesses particulièrement compacte, en particulier en longueur selon la direction des axes des organes rotatifs amont et aval. A titre d'exemple, une boîte de vitesses conçue pour un couple de 250 Nm peut être réalisée avec un encombrement longitudinal inférieur à 350 mm, contre au moins 380 à 390 mm pour une boîte de vitesses classique telle que décrite dans le document EP 0 434 525 B1 ayant un nombre de rapports équivalent.

Des rapports peuvent être réalisés par des trains planétaires fonctionnant avec un rapport local différent de 1: 1. Ces rapports sont de préférence les rapports dits « inférieurs » ou « courts » du dispositif selon l'invention (c'est à dire les rapports pour lesquels la vitesse de l'organe aval est plus petite pour une vitesse donnée de l'organe amont, par comparaison avec les rapports dits « supérieurs » ou « longs »). Ceci est très avantageux pour la commande, comme on le verra plus loin.

Du point de vue de l'agencement spatial, au moins un des transferts peut être placé axialement entre au moins un des trains planétaires et une extrémité de raccordement mécanique de l'organe amont avec une source motrice.

De préférence, le deuxième transfert amont définit entre l'organe rotatif amont et l'organe rotatif aval, lorsque le deuxième train planétaire aval est dans un état de prise directe locale, un rapport de transmission différent de chacun de ceux définis par les deux autres transferts par engrenage précités lorsque leur train planétaire respectif est en état de prise directe locale. La prise directe locale de ce deuxième train planétaire aval fournit ainsi un nouveau rapport global différent des deux autres obtenus par les prises directes des deux autres trains planétaires.

Le premier arbre intermédiaire et le deuxième arbre intermédiaire peuvent chacun porter avec solidarité de rotation un pignon dit « d'attaque ». Les deux pignons d'attaque engrènent typiquement avec une même roue dentée sur l'organe rotatif aval.

Le premier et le deuxième transfert amont, associés respectivement aux premier et deuxième train planétaire aval, peuvent comprendre une roue dentée commune sur l'organe rotatif amont, engrenant avec deux pignons montés chacun suivant l'un respectif des axes des premier et deuxième trains planétaires aval. En particulier, la roue dentée commune peut comprendre deux dentures de diamètres différents engrenant chacune avec l'un respectif des deux pignons. On peut ainsi à la fois réduire l'encombrement perpendiculairement aux axes et choisir plus finement les rapports de transfert du premier et du deuxième transfert amont et/ou l'écart entre ces rapports.

Les transferts peuvent être disposés dans deux plans perpendiculaires à l'axe de l'organe rotatif amont, et les trains planétaires peuvent être logés spatialement entre ces deux plans.

Les trois trains planétaires peuvent comprendre :
- un train planétaire, de préférence l'un des trains aval, dont l'entrée est reliée à un planétaire et la sortie est reliée à un porte-satellites, ce train étant capable d'une prise directe locale pour réaliser un sixième rapport, et d'une démultiplication par blocage d'une couronne pour réaliser un deuxième rapport;
- un autre train planétaire, de préférence le train amont, dont l'entrée est reliée à un planétaire et la sortie est reliée à un porte-satellites, cet autre train étant capable d'une prise directe locale pour réaliser un quatrième rapport, et d'une démultiplication par blocage d'une couronne pour réaliser un premier rapport ; et
- encore un autre train planétaire, de préférence l'autre train aval, dont l'entrée est reliée à une couronne et la sortie est reliée à un porte-satellites, ce train étant capable d'une prise directe locale pour réaliser un cinquième rapport, et d'une démultiplication par blocage d'un planétaire pour réaliser un troisième rapport ;
   les rapports étant de plus en plus longs du premier au sixième rapport.

L'un des trains planétaires peut comprendre un planétaire relié à l'entrée, une couronne reliée à la sortie, et un porte-satellites pouvant être sélectivement bloqué pour réaliser un rapport de marche arrière.

Selon une autre particularité de l'invention, l'un des trains planétaires peut comprendre au moins deux trains épicycloïdaux ayant une entrée commune et une sortie commune. Ces deux trains épicycloïdaux sont alors mécaniquement en parallèle entre l'entrée et la sortie du train planétaire. Dans un mode de réalisation :
un premier de ces trains épicycloïdaux comporte un porte-satellites libre par rapport à l'entrée commune et à la sortie commune et pouvant être immobilisé par rapport au bâti au moyen de l'un des moyens d'accouplement sélectif pour réaliser une marche arrière,
un deuxième de ces trains épicycloïdaux ayant un porte-satellites relié de façon permanente à l'une desdites entrée et sortie communes.

Un tel train planétaire peut réaliser en plus du rapport de marche arrière, deux rapports de marche avant, chacun par activation de l'un respectif des moyens d'accouplement sélectif. De préférence, ledit un des trains planétaires est le train planétaire amont, les premier et second trains épicycloïdaux ont des planétaires reliés à l'entrée commune et solidaires de l'organe rotatif amont, le porte-satellites du second train épicycloïdal étant relié de façon permanente avec la sortie commune et avec une couronne du premier train épicycloïdal.

De préférence, pour au moins un des trains planétaires, les moyens d'accouplement sélectif associés au train sont centrés autour de l'axe du train et sont tous sensiblement à une même distance de l'axe.

L'un au moins des trains planétaires peut comprendre un train épicycloïdal comprenant :
- un porte-satellites relié de façon permanente, au moins indirecte, à un premier des organes rotatifs amont et aval, et pouvant être sélectivement relié, de façon au moins indirecte, au second desdits organes rotatifs amont et aval par un des moyens d'accouplement sélectif, créant ainsi une prise directe locale ;
- un planétaire et une couronne dont l'un est relié de façon permanente audit second organe rotatif ; et dont l'autre peut être relié sélectivement au bâti par l'un des moyens d'accouplement sélectif.

Chaque rapport de transmission peut être réalisé par fermeture d'un seul moyen d'accouplement sélectif de l'un des trains planétaires et mise ou maintien à l'état ouvert des autres moyens d'accouplement sélectif du dispositif de transmission.

Les moyens d'accouplement sélectif peuvent être du type progressif et capables d'assurer l'adaptation progressive entre la vitesse de rotation d'un moteur de véhicule et la vitesse du véhicule, en particulier pour la mise en mouvement du véhicule à partir de l'arrêt par l'un au moins des moyens d'accouplement sélectif.

Selon une autre particularité de l'invention, le plus court des rapports obtenus par des prises directes locales peut être plus long que le plus long des rapports obtenus par accouplement sélectif entre le bâti et un élément d'un train planétaire.

### Description des figures et modes de réalisation

D'autres particularités et avantages de l'invention ressortiront de la description détaillée de modes de réalisation nullement limitatifs, et des dessins annexés où :
- les Figures 1, 3 et 5 illustrent schématiquement un premier, un deuxième et un troisième mode de réalisation de l'invention, chacun fournissant six rapports plus une marche arrière, et comprenant trois trains planétaires qui ne sont représentés qu'en demi-vue ;
- les Figures 2 et 4 sont des vues en bout illustrant schématiquement l'organisation des différents axes du premier mode de réalisation selon la Figure 1 et respectivement du deuxième mode de réalisation selon la figure 3 ; et
- la figure 6 est une vue en coupe axiale d'un détail du mode de réalisation de la figure 5.

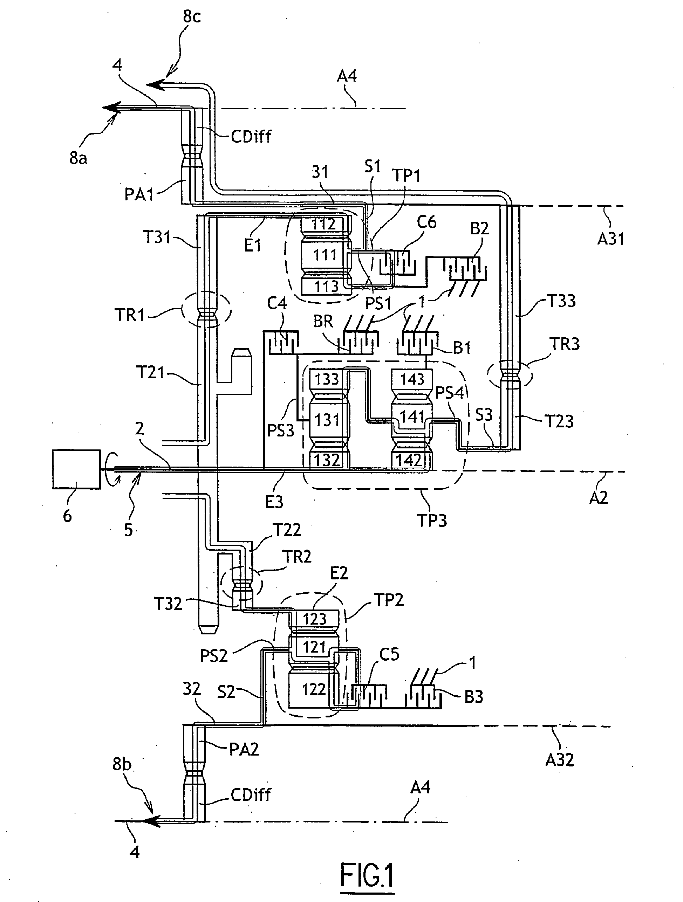

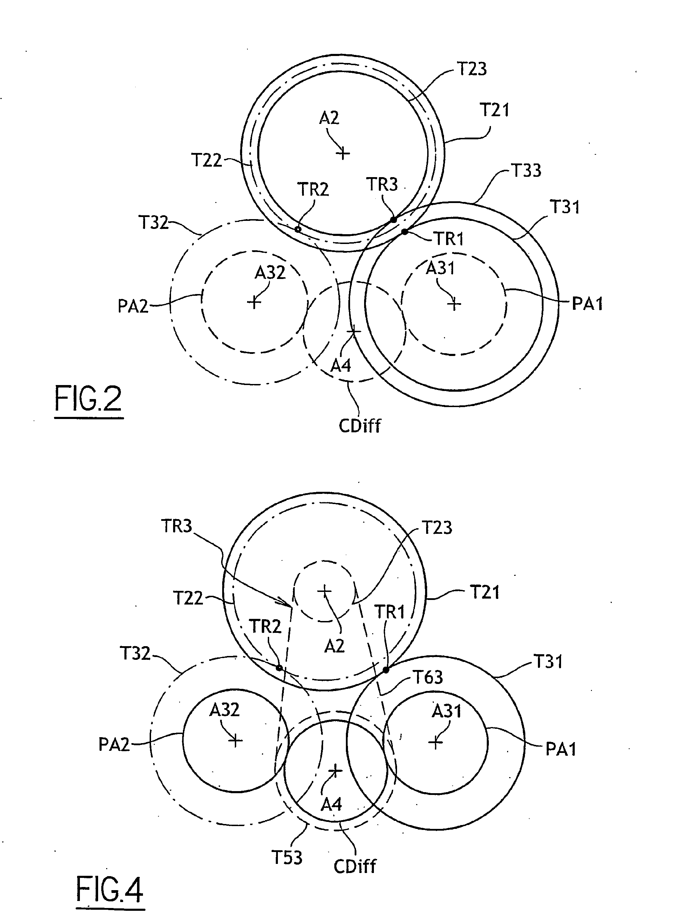

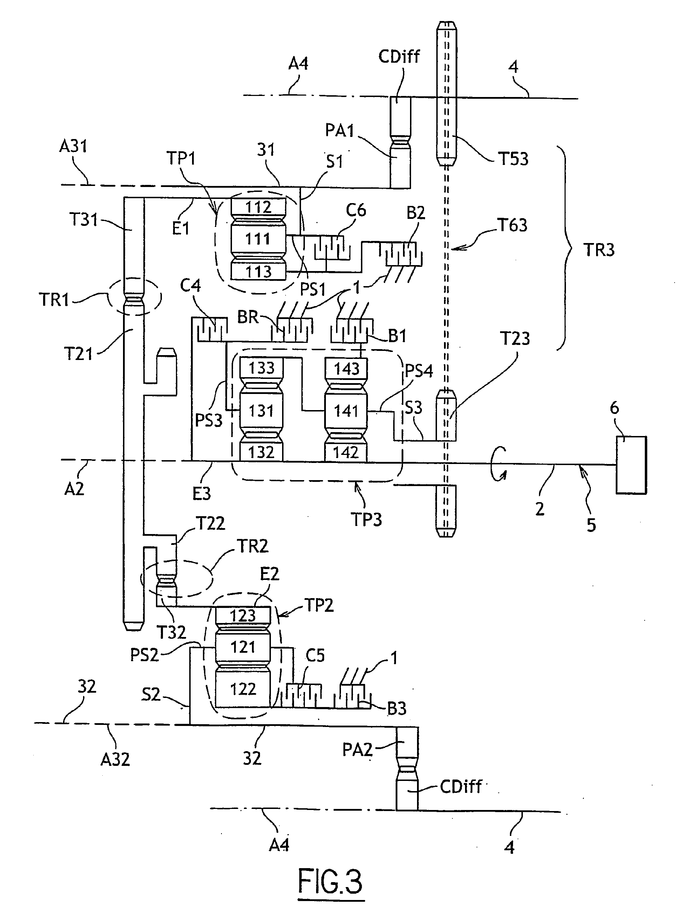

Dans le premier mode de réalisation des Figures 1 et 2 et dans le deuxième mode de réalisation des Figures 3 et 4, le dispositif de transmission selon l'invention comprend un organe rotatif amont 2 constitué par un arbre d'entrée. Typiquement, lorsque le dispositif de transmission est installé, l'organe rotatif amont 2 est relié de façon permanente à une source motrice 6 telle qu'un moteur d'automobile, en particulier un moteur à combustion interne, sans interposition d'un embrayage ou autre dispositif d'accouplement variable tel qu'un convertisseur de couple. Autrement dit, la liaison typique entre l'arbre 2 et le moteur est telle que toute rotation d'un arbre de puissance du moteur s'accompagne nécessairement d'une rotation de l'arbre 2, et l'arbre 2 n'est à l'arrêt que si l'arbre du moteur est immobile.

Un organe rotatif aval 4, constitué ici par un arbre de sortie, est destiné à être relié aux roues motrices d'un véhicule automobile par l'intermédiaire d'un différentiel, ou peut constituer lui-même un arbre d'entrée de ce différentiel. La liaison entre l'arbre 4 et les roues motrices du véhicule est typiquement telle qu'au moins une roue motrice tourne lorsque l'arbre 4 tourne. Le dispositif de transmission comprend en outre un premier et un deuxième arbre intermédiaire 31, 32, s'étendant suivant un premier et respectivement un deuxième axe intermédiaire A31, A32 qui sont tous deux parallèles aux axes A2 et A4 de l'organe rotatif amont 2 et de l'organe rotatif aval 4, mais pas coaxiaux avec ceux-ci. Pour la clarté des Figures 1 et 3, l'arbre de sortie 4 est représenté à la fois en haut et en bas, et les deux axes intermédiaires A31 et A32 sont représentés dans le même plan que celui des axes A2 et A4 des organes 2 et 4 (c'est-à-dire le plan de la Figure 1 ou de la Figure 3). En réalité, les axes A2 et A4 et les deux axes intermédiaires A31 et A32 sont aux quatre sommets d'un quadrilatère, comme le montrent les Figures 2 et 4.

Au moins lorsqu'il fonctionne selon ses rapports « inférieurs », le dispositif est utilisé pour démultiplier (c'est à dire réduire) la vitesse de rotation de l'organe amont 2 en une vitesse plus faible de l'organe aval 4, et par conséquent pour augmenter le couple transmis.

Trois trains planétaires TP1, TP2 et TP3 sont disposés respectivement suivant les axes intermédiaires A31 et A32 et l'axe A2.

Le dispositif de transmission relie l'organe rotatif amont 2 à l'organe rotatif aval 4 selon trois trajets de puissance 8a, 8b et 8c symbolisés par des flèches à la figure 1. Les trajets 8a, 8b, 8c sont fonctionnellement en parallèle entre les organes rotatifs 2 et 4. Chaque trajet 8a, 8b ou 8c passe par l'un respectif des trois trains planétaires TP1, TP2 et TP3. Le premier trajet de puissance 8a passe par un premier transfert par engrenage TR1 monté fonctionnellement en série entre l'organe rotatif amont 2 et le premier train planétaire TP1. Le deuxième trajet de puissance 8b passe par un deuxième transfert par engrenage TR2 monté fonctionnellement en série entre l'organe rotatif amont 2 et un deuxième train planétaire. TP2. Le troisième trajet de puissance 8c passe par un troisième transfert par engrenage TR3 monté fonctionnellement en série entre le troisième train planétaire TP3 et l'organe rotatif aval 4.

Les trains planétaires TP1, TP2 et TP3 sont sensiblement alignés entre deux plans perpendiculaires aux axes A2, A31, A32, A4, ces plans contenant, l'un, les transferts TR1 et TR2, l'autre le transfert TR3. Chaque train planétaire TP1, TP2, TP3 est situé radialement au-delà des deux autres, de sorte que l'encombrement axial des trois trains considérés ensemble est sensiblement le même que celui de chacun d'eux.

Le transfert TR1 comprend un pignon menant T21 solidaire de l'organe rotatif amont 2 et engrenant avec un pignon mené T31 disposé selon le premier axe intermédiaire A31 en étant solidaire de l'organe d'entrée E1 du premier train planétaire TP1, mais libre èn rotation relativement à l'arbre intermédiaire 31. Le transfert TR1 est dit « amont » car il est en amont du train planétaire associé TP1, relativement au flux d'énergie provenant de la source motrice 6. Le train planétaire TP1 est dit « aval » car il est en aval du transfert TR1.

Le transfert TR2 comprend un pignon menant T22 solidaire de l'organe rotatif amont 2 et engrenant avec un pignon mené T32 disposé selon le deuxième axe intermédiaire A32 en étant solidaire de l'organe d'entrée E2 du deuxième train planétaire TP2, mais libre en rotation relativement à l'arbre intermédiaire 32. Le transfert TR2 et le train planétaire TP2 sont donc un transfert amont et un train planétaire aval, comme TR1 et TP1 respectivement.

Les pignons menants T21 et T22 appartiennent à une roue dentée commune, mais possèdent des diamètres de denture différents. Les rapports des transferts TR1 et TR2 sont différents. Les axes intermédiaires A31 et A32 sont en général à des distances différentes de l'arbre d'entrée 2. Le fait d'utiliser deux pignons de transfert solidaires au lieu d'un seul qui engrènerait avec les deux pignons menés tels que T31 et T32 permet de rapprocher au maximum chaque axe intermédiaire A31 et A32 de l'axe A2 compte-tenu de l'encombrement radial des trains planétaires, tout en améliorant les possibilités de choisir avec précision les deux rapports de transfert et l'écart entre ces deux rapports.

L'organe de sortie S1, S2 du train planétaire TP1, TP2 respectivement est en liaison d'entraînement avec le premier arbre intermédiaire 31 ou le deuxième arbre intermédiaire 32 respectivement. Typiquement, comme représenté, l'organe de sortie S1 est solidaire du premier arbre intermédiaire 31 et l'organe de sortie S2 est solidaire du deuxième arbre intermédiaire 32. Chaque arbre intermédiaire 31, 32 est lui-même solidaire en rotation d'un pignon de sortie PA1 ou PA2 respectivement. Les pignons PA1 et PA2 engrènent avec une couronne CDiff solidaire de l'organe rotatif aval 4. Dans cet exemple, la couronne CDiff est la couronne d'entraînement de la cage d'un différentiel classique pour l'entraînement des roues motrices du véhicule.

Le transfert par engrenage TR3 est monté fonctionnellement entre un organe de sortie S3 du train planétaire TP3 et l'arbre de sortie 4. L'arbre d'entrée 2 est en permanence solidaire en rotation d'un organe d'entrée E3 du train planétaire TP3. L'organe de sortie S3 est en permanence solidaire en rotation d'un pignon menant T23 du transfert TR3. Le pignon de transfert menant T23 et l'organe de sortie S3 sont coaxiaux avec l'organe amont 2 tout en pouvant tourner à une vitesse différente de ce dernier. Le transfert TR3 est dit « aval » car il est en aval du tain planétaire associé TP3, qui est donc dit « amont ».

Dans le premier mode de réalisation de l'invention, représenté aux figures 1 et 2, le pignon menant T23 engrène avec un pignon mené T33. Le pignon mené T33 est solidaire en rotation de l'arbre intermédiaire A31 de sorte que lorsque le train planétaire TP3 est actif, le pignon menant T23 transmet le mouvement de rotation à l'arbre de sortie 4 via l'arbre intermédiaire A31, le pignon PA1 et la couronne CDiff. Dans l'exemple représenté, l'arbre 4 est relié aux roues motrices par son extrémité située à gauche à la figure 1, c'est-à-dire du même côté que l'extrémité 5 de raccordement de l'arbre amont 2 avec la source motrice 6. L'architecture est ainsi considérablement simplifiée. Les pignons menants T21 et T22 des premier et deuxième transferts TR1 et TR2 sont placés axialement le long de l'axe A2 entre d'une part les trains planétaires TP1, TP2 et TP3 et d'autre part l'extrémité 5 de raccordement mécanique de l'organe amont 2 avec la source motrice 6.

Dans le deuxième mode de réalisation de l'invention, représenté aux figures 3 et 4, et qui ne sera décrit que pour ses différences avec celui des figures 1 et 2, le pignon de transfert mené T53 du troisième transfert TR3 est coaxial avec l'organe rotatif aval 4, et solidaire en rotation de ce dernier. Les pignons menant T23 et mené T53 sont des pignons à chaîne. Le transfert TR3 comprend une chaîne T63 qui lie en rotation avec un rapport de transmission choisi le pignon menant T23 avec le pignon mené T53 solidaire en rotation de l'arbre 4. Dans cet exemple, l'arbre 4 est relié aux roues motrices par son extrémité située à droite sur les figures, adjacente au transfert TR3, et opposée aux transferts TR1 et TR2. L'extrémité 5 de raccordement de l'arbre amont 2 avec la source motrice 6 est elle aussi située du côté droit, donc comme dans l'exemple précédent du même côté que la liaison de l'organe aval 4 avec les roues motrices du véhicule. Le pignon menant T23 du troisième transfert TR3 est ainsi placé axialement le long de l'axe A2 entre d'une part les trains planétaires TP1, TP2 et TP3 et d'autre part l'extrémité 5 de raccordement mécanique de l'organe amont 2 avec la source motrice 6.

Dans les deux modes de réalisation, les rapports de transfert respectifs entre le pignon menant T21 (le train TP1 étant supposé fonctionner en prise directe), T22 (le train TP2 étant supposé fonctionner en prise directe) ou T23 d'une part, et l'organe rotatif aval 4 d'autre part, sont différents.

Plus spécifiquement, dans les deux modes de réalisation, les pignons PA1 et PA2 ont des diamètres identiques. Les rapports d'engrènement T21/T31 et T22/T32 sont différents. Dans le premier mode de réalisation, le rapport d'engrènement T23/T33 diffère de T21/T31 et de T22/T32. Dans le deuxième mode de réalisation (figures 3 et 4), le rapport T23/T53 diffère de T21/T31 tel que modifié par PA1/CDiff et de T22/T32 tel que modifié par PA2/CDiff.

Le premier et le deuxième mode de réalisation de l'invention comprennent en outre un certain nombre de dispositifs d'accouplement sélectif BR, B1, B2, B3, C4, C5, C6 qui seront décrits plus en détail plus loin. La conception est telle que chaque rapport de transmission est réalisé par activation, c'est-à-dire mise en l'état accouplé, d'un seul des moyens d'accouplement sélectif, et désactivation, c'est-à-dire mise ou maintien à l'état désaccouplé, de tous les autres moyens d'accouplement sélectif. L'état de point mort (« neutral ») dans lequel les organes rotatifs 2 et 4 sont indépendants l'un de l'autre, est obtenu par désactivation de tous les moyens d'accouplement sélectif.

Les différents moyens d'accouplement sélectifs sont ici réalisés sous la forme de mécanismes de friction par serrage, du type multi-disques en bain d'huile. Ces moyens sont appelés « freins » lorsque leur activation réalise l'accouplement d'un élément mobile avec un bâti fixe 1 ou toute pièce solidaire de celui-ci. Ces moyens sont appelés « embrayages » lorsque leur activation réalise l'accouplement mutuel de deux éléments rotatifs pour que ceux-ci tournent solidairement l'un avec l'autre.

Les moyens d'accouplement (B2 et C6 ; B3 et C5 ; BR, B1 et C4) associés à chacun des trains planétaires (respectivement TP1 ; TP2 ; TP3) sont centrés sensiblement à une même distance de l'axe (respectivement A31 ; A32 ; A2) dudit train planétaire. Ainsi, la compacité du dispositif selon l'invention est optimisée, et l'amenée d'huile au sein des moyens d'accouplement est simplifiée.

Le premier train planétaire TP1 comprend un premier train épicycloïdal coaxial avec le premier axe intermédiaire A31. Ce premier train épicycloïdal comprend un porte-satellites PS1 sur lequel sont montés des satellites excentrés 111 libres de tourner sur leur propre axe par rapport au porte-satellites PS1. Les satellites 111 engrènent avec un planétaire 112 central et avec une couronne périphérique 113. Cette dernière est coaxiale avec le planétaire 112, avec le porte-satellites PS1 et avec l'axe A31.

Le planétaire 112 central est solidarisé en rotation avec l'entrée E1 du train planétaire TP1 et avec le pignon mené T31, et se trouve ainsi relié de façon permanente à l'un des organes rotatifs amont et aval, en l'occurrence l'organe rotatif amont 2 par l'intermédiaire du transfert TR1.

Le porte-satellites PS1 est solidaire en rotation de la sortie S1 et donc du premier arbre intermédiaire 31. Il est ainsi relié de façon permanente à l'autre des organes rotatifs amont et aval, en l'occurrence l'organe rotatif aval 4 par l'intermédiaire du pignon PA1.

Un frein B2, monté fonctionnellement entre la couronne 113 et le bâti 1, permet sélectivement de bloquer et de libérer la rotation de la couronne 113 relativement au bâti fixe 1. Lorsque la couronne 113 est immobilisée, le planétaire 112, entraîné par l'organe amont 2, entraîne le porte-satellites PS1 selon une démultiplication locale dépendant de la géométrie du premier train épicycloïdal TP1. La démultiplication totale dépend donc de cette démultiplication locale, ainsi que du transfert TR1 et du rapport d'engrènement entre PA1 et CDiff. En activant le frein B2 on crée ainsi un rapport de transmission global, constituant dans le présent exemple le deuxième rapport (2°).

Un embrayage C6 monté fonctionnellement entre l'entrée E1 et la sortie S1 du premier train planétaire TP1 permet sélectivement de faire fonctionner le train TP1 en prise directe locale lorsque l'embrayage C6 est fermé (activé), ou de laisser l'entrée E1 et la sortie S1 tourner à des vitesses différentes lorsque l'embrayage C6 est ouvert (désactivé), notamment pour le fonctionnement selon le deuxième rapport lorsque le frein B2 est fermé. La prise directe locale dans le premier train TP1 fournit un rapport global déterminé par le rapport du premier transfert TR1 et le rapport PA1/CDiff. Dans cet exemple, ce rapport global est le sixième rapport (6°).

Le deuxième train planétaire TP2 comprend un deuxième train épicycloïdal coaxial avec le deuxième axe intermédiaire A32. Ce train comprend un porte-satellites PS2 supportant un ou plusieurs pignons satellites 121 excentrés, libres de tourner sur leur propre axe par rapport au porte-satellites PS2. Les satellites 121 engrènent avec un planétaire 122 et avec une couronne périphérique 123. Cette dernière est coaxiale avec le planétaire central 122, avec le porte-satellite PS2 et avec l'axe A32.

Dans ce deuxième train épicycloïdal, la couronne 123 est solidaire de l'entrée E2, et donc du pignon de transfert mené T32. La couronne 123 est ainsi en liaison d'entraînement permanente avec l'un des organes rotatifs amont et aval, en l'occurrence l'organe amont 2.

Le porte-satellites PS2 est solidaire en rotation de la sortie S2 et donc du deuxième arbre intermédiaire 32. Le porte-satellite PS2 est ainsi en liaison d'entraînement permanente avec l'autre des organes rotatifs amont et aval, c'est à dire l'organe aval 4.

Un embrayage C5 permet sélectivement d'accoupler et de désaccoupler le planétaire 122 avec le porte-satellites PS3, et donc l'entrée E2 avec la sortie S2. Lorsque l'embrayage C5 est en état d'accouplement, le deuxième train planétaire TP2 est en état de prise directe locale entre son entrée E2 et sa sortie S2.

La géométrie du deuxième transfert TR2 et du deuxième pignon de sortie PA2 fournit alors un rapport global de transmission, correspondant dans cet exemple au cinquième rapport (5°).

Un frein B3, monté fonctionnellement entre le planétaire 122 et le bâti 1, permet sélectivement de bloquer et de libérer la rotation du planétaire 122 relativement au bâti 1 fixe. Lorsque le planétaire 122 est bloqué, la rotation de la couronne 123 entraîne le porte-satellites PS2 selon un rapport de démultiplication local déterminé par la géométrie de ce train épicycloïdal.

Lorsque le frein B3 est bloqué la géométrie du train épicycloïdal se combine avec celles du deuxième transfert TR2 et du deuxième pignon de sortie PA2 pour donner un rapport global de transmission, correspondant dans cet exemple au troisième rapport (3°).

Le troisième train planétaire TP3 comprend un troisième et un quatrième train épicycloïdal, coaxiaux entre eux et avec l'axe A2 de l'organe rotatif amont 2.

Ces deux trains épicycloïdaux ont une entrée commune E3 et une sortie commune S3. L'entrée commune E3 est solidaire de l'organe amont 2. La sortie commune S3 est solidaire du pignon menant T23.

Le troisième train épicycloïdal comprend un porte-satellites PS3 supportant un ou plusieurs pignons satellites excentrés 131 libres de tourner autour de leur propre axe par rapport au porte-satellites PS3. Les satellites 131 engrènent d'une part avec un planétaire central 132. et d'autre part avec une couronne périphérique 133. Cette dernière est coaxiale avec le planétaire 132 et avec l'organe rotatif amont 2.

Le quatrième train épicycloïdal comprend un porte-satellites PS4 supportant un ou plusieurs pignons satellites excentrés 141 libres de tourner autour de leur propre axe par rapport au porte-satellites PS4. Les satellites 141 engrènent d'une part avec un planétaire central 142 et d'autre part avec une couronne 143 périphérique. Cette dernière est coaxiale avec le planétaire 142, le porte-satellites PS4 et avec l'organe rotatif amont 2.

Les planétaires centraux 132 et 142 de ces troisième et quatrième trains épicycloïdaux sont tous deux solidaires de l'entrée commune E3, et donc de l'organe rotatif amont 2.

La couronne 133 du troisième train épicycloïdal et le porte-satellites PS4 du quatrième train épicycloïdal sont solidaires de la sortie commune S3 et donc du pignon menant T32. La couronne 133 et le porte-satellites PS4 sont donc reliés de façon permanente à l'un des organes rotatifs amont et aval, en l'occurrence l'organe aval 4 par l'intermédiaire du transfert TR3.

Le porte-satellites PS3 du troisième train épicycloïdal 131 à 133 est libre par rapport à l'entrée commune E3 et à la sortie commune S3, et peut être sélectivement immobilisé par rapport au bâti 1 au moyen de l'un des moyens d'accouplement sélectif, le frein BR, pour réaliser une marche arrière.

Lorsque le porte-satellites PS3 est immobilisé, le planétaire 132 lié à l'entrée E3 entraîne de façon démultipliée en sens inverse la couronne 133, par l'intermédiaire des satellites 131 qui tournent sur eux-mêmes. La couronne 133 entraîne alors la sortie commune S3 et donc l'organe aval 4, réalisant ainsi le rapport de marche arrière (MA).

La couronne 143 du quatrième train épicycloïdal est libre par rapport à l'entrée commune E3 et à la sortie commune S3 et peut être sélectivement bloquée et libérée en rotation relativement au bâti 1 au moyen de l'un des moyens d'accouplement sélectif, le frein B1. Lorsque la couronne 143 est immobilisée, le planétaire 142, lié à l'entrée E3 entraîne le porte-satellites PS4 selon une démultiplication locale dépendant de la géométrie du train épicycloïdal.

En activant le frein B1 et en libérant les autres moyens d'accouplement sélectif, on crée ainsi un rapport de transmission global dépendant de la géométrie du quatrième train épicycloïdal, du troisième transfert TR3 (et dépendant en outre de la géométrie du premier pignon de sortie PA1 dans le premier mode de réalisation). Ce rapport global constitue dans le présent exemple le premier rapport (1°).

En outre, l'embrayage C4, faisant partie des moyens d'accouplement sélectif, accouple et désaccouple sélectivement l'entrée E3 et la sortie S3 l'une par rapport à l'autre. Lorsque l'embrayage C4 est activé, le train planétaire TP3 fonctionne en prise directe locale procurant un rapport de transmission, ici le quatrième rapport (4°), qui dépend du rapport du transfert TR3 (et qui dépend en outre du rapport d'engrènement PA1-CDiff dans le premier mode de réalisation).

Selon une variante non représentée ici, les pignons de sortie PA1 et PA2 des arbres intermédiaires 31 et 32 peuvent présenter des dimensions différentes et contribuer à déterminer des rapports différents.

Dans les deux modes de réalisation décrits ici, les organes rotatifs amont et aval sont reliés l'un à l'autre par des engrènements permanents. Les changements de rapport ne se font pas en manoeuvrant des synchroniseurs ou des crabots, mais par des embrayages ou freins à bain d'huile qui permettent des transitions douces entre les rapports, sans rupture de la transmission de puissance. La commande des changements de rapport est simplifiée car aucun embrayage n'est nécessaire entre le moteur du véhicule et l'organe d'entrée 2. Le rendement n'est pas dégradé par un convertisseur de couple, car un convertisseur de couple n'est pas nécessaire.

Ainsi que détaillé ci-dessus, chaque rapport de transmission est réalisé par fermeture d'un seul moyen d'accouplement sélectif de l'un des trois trains planétaires TP1, TP2 et TP3 et ouverture ou maintien à l'état ouvert des autres moyens d'accouplement sélectif du dispositif de transmission. Ceci simplifie la commande et permet de manière assez simple une régulation conjointe de la mise en pression de la chambre hydraulique du moyen d'accouplement sélectif en train de se fermer, et de la décroissance de pression dans la chambre hydraulique du moyen d'accouplement sélectif en train de s'ouvrir. Une telle régulation permet d'éviter les à-coups d'une part, et d'éviter ou limiter la rupture du flux d'énergie à travers la transmission d'autre part.

Il est possible de sauter un ou plusieurs rapports, simplement en libérant l'accouplement en cours et en commandant directement l'activation de l'accouplement correspondant au rapport choisi qui n'est pas contigu au rapport antérieur.

Plus particulièrement, les moyens d'accouplement sélectif B1, B2, B3, C4, C5, C6 et BR sont du type progressif et capables d'assurer l'adaptation progressive entre la vitesse de rotation d'un moteur de véhicule et la vitesse du véhicule. Les freins B1 et BR sont capables de servir de moyen de mise en mouvement progressive du véhicule à partir de l'arrêt, en première vitesse de marche avant ou respectivement en marche arrière.

Pour cela, on part d'une situation initiale où l'organe d'entrée 2 tourne avec le moteur du véhicule et l'organe de sortie 4 est à l'arrêt avec les roues du véhicule, tous les moyens d'accouplement étant désactivés. Pour démarrer le véhicule, on ferme le frein B1 ou le frein BR avec la progressivité voulue.

Typiquement, chacun des moyens d'accouplement sélectif comprend un dispositif de friction multi-disques à bain d'huile. Chacun des deux éléments à accoupler porte une série de disques. Les disques de l'un des éléments alternent avec ceux de l'autre élément. Lors de l'activation, les disques de ces deux séries sont serrés les uns contre les autres par une pièce de poussée (non représentée), actionnée par mise en pression d'une chambre hydraulique (non représentée). On remarque que les modes de réalisation décrits ne comprennent qu'un seul embrayage C6, C5 ou C4 par axe A31, A32, ou A2 respectivement porteur d'un train planétaire TP1, TP2 ou TP3 respectivement. Ceci permet de simplifier considérablement l'amenée d'huile vers les chambres hydrauliques des embrayages par un même côté droit ou gauche des arbres et par des conduits (non représentés) passant par le centre des arbres. Les chambres hydrauliques des freins peuvent être alimentées à travers des pièces fixes telles que le bâti 1.

Dans chaque train planétaire TP1, TP2 ou TP3, le rapport de marche avant le plus long est obtenu par activation d'un embrayage et le rapport le plus court est obtenu par activation d'un frein agissant sur la couronne (frein B1 ou B2) ou sur le planétaire (frein B3). Le couple de freinage exercé par ces freins est bien plus faible (environ 1,5 à 2,5 fois plus faible) que le couple transmis à la sortie S1, S2 ou S3 du train lors du fonctionnement sur le rapport de transmission correspondant.

De préférence, les rapports obtenus par des prises directes locales C4, C5, C6 présentent en majorité des démultiplications moins grandes (correspondent à des rapports plus longs) que les rapports obtenus par un accouplement sélectif BR, B1, B2, B3 agissant entre le bâti et un élément d'un train planétaire.

Dans les modes de réalisation décrits ici, seuls les rapports supérieurs (4°, 5° et 6°) utilisent un accouplement de type embrayage, c'est à dire les rapports qui produisent le plus faible couple sur l'organe de sortie 4. Les rapports inférieurs (MA, 1°, 2° et 3°) utilisent tous des accouplements de type frein.

La réalisation en est simplifiée et plus robuste, car les freins sont plus faciles à commander et se refroidissent plus efficacement du fait qu'ils comportent une partie immobile liée au bâti.

En limitant les besoins en freinage au niveau des moyens d'accouplement sélectif, il est aussi possible de limiter les phénomènes de traînée hydraulique et les pertes et échauffements dus à cette traînée. Il est aussi possible de limiter la pression hydraulique de commande nécessaire, et donc la puissance de la pompe qui la génère.

Pour activer un rapport du dispositif de transmission, il suffit de commander l'activation d'un seul des moyens d'accouplement sélectif, tout en libérant les autres. Le point mort est simplement obtenu en les laissant tous libres. Lorsqu'un moyen d'accouplement sélectif est activé, les trains planétaires qui ne sont pas associés à ce moyen d'accouplement sélectif laissent leurs organes d'entrée et de sortie tourner librement l'un par rapport à l'autre.

Dans les modes de réalisation décrits ici, l'activation des différents freins et embrayages donne les rapports suivants, dont les valeurs sont données à titre d'exemple dans le tableau suivant où, pour chaque rapport, la valeur du rapport est indiquée dans la colonne du moyen d'accouplement sélectif activé :

| | **moyens d'accouplement sélectif** | | | | | | |
|---|---|---|---|---|---|---|---|
| **rapports** | BR | B1 | B2 | B3 | C4 | C5 | C6 |
| Marche arrière (MA) | 3,94 | | | | | | |
| 1° rapport | | 4,38 | | | | | |
| 2° rapport | | | 2,59 | | | | |
| 3° rapport | | | | 1,83 | | | |
| 4° rapport | | | | | 1,42 | | |
| 5° rapport | | | | | | 1,16 | |
| 6° rapport | | | | | | | 0,97 |

Par rapport à de nombreux dispositifs connus, l'invention permet en particulier une meilleure souplesse dans le choix de étagement des rapports, combinée à un encombrement limité du dispositif.

Par rapport à l'enseignement du document WO 2005/050060, l'invention permet en particulier de réduire le nombre de dentures à réaliser et d'améliorer la compacité et l'encombrement du dispositif de transmission.

Dans ces différents modes de réalisation, le fait d'ajouter un rapport supplémentaire sous la forme d'une prise directe locale supplémentaire améliore le rendement de la transmission. En effet, au sein d'un trajet de puissance, une prise directe locale présente un meilleur rendement qu'un entraînement par engrenage.

De plus, en limitant le nombre d'engrènements intervenant en série dans les différents trajets de puissance 8a, 8b, 8c, l'invention permet de limiter les pertes dans la transmission. Par rapport à une transmission classique telle que décrite dans le document EP 0 434 525, on constate par exemple un gain d'environ 5% à 6% de rendement, ce qui se répercute sur les performances et la consommation du moteur et du véhicule.

Dans le troisième mode de réalisation, qui ne sera décrit que pour ses différences par rapport au premier, il n'y a plus qu'un seul arbre intermédiaire 3, ayant un axe géométrique A3, et qui est en liaison d'entraînement avec la couronne CDiff par un pignon d'attaque unique PA. Ce mode de réalisation est préféré pour des applications dans lesquelles on peut accepter un peu plus de longueur axiale, mais où l'on doit limiter l'encombrement radial, notamment vers le bas du véhicule pour éviter que la boîte de vitesses réduise la garde au sol du véhicule.

Les trains planétaires aval TP1 et TP2 sont tous deux installés sur l'arbre 3 autour de l'axe A3, le long duquel ils sont alignés. Les organes de sortie S1 et S2 des trains TP1 et TP2 sont solidaires en rotation de l'arbre intermédiaire 3.

Les transferts amont TR1 et TR2 sont situés axialement de part et d'autre du train planétaire amont TP3 qui reste centré sur l'organe rotatif amont 2. Les trains planétaires TP1 et TP2 sont tous deux situés axialement entre les transferts TR1 et TR2.

Le pignon de transfert mené T33 du troisième transfert par engrenage TR3 est solidaire en rotation de l'arbre intermédiaire 3. Il aurait été possible de fixer directement le pignon de transfert mené T33 sur l'arbre 3, comme illustré par le trait mixte 71.

Toutefois, suivant une particularité avantageuse de ce mode de réalisation, le pignon de transfert mené T33 est solidaire du porte-satellites de l'un des trains planétaires TP1, TP2 montés sur l'arbre intermédiaire 3, ce porte-satellites étant lui-même solidaire de l'arbre intermédiaire 3 car il constitue l'organe de sortie du train planétaire TP1 ou TP2 en question.

Dans l'exemple représenté, le pignon mené T33 est solidaire du porte-satellites PS2 du train TP2 qui est situé axialement entre le pignon d'attaque PA et l'autre train TP1 disposé autour de l'arbre intermédiaire 3.

Les satellites 121 du porte-satellites PS2 solidaire du pignon de transfert mené T33 sont situés axialement entre d'une part le raccordement du porte-satellites PS2 avec l'arbre intermédiaire 3 et d'autre part le raccordement du porte-satellites PS2 avec le pignon de transfert mené T33. Ledit pignon de transfert T33 est lui-même situé axialement entre d'une part les satellites 121 et d'autre part les moyens d'accouplement sélectif C5 et B3 associés à ce train. Ainsi, les transferts TR2 et TR3 sont axialement très proches l'un de l'autre à une extrémité de la boîte de vitesses, dans cet exemple, l'extrémité adjacente à la source motrice 6 et au pignon d'attaque PA.

Le montage du train TP3 sur l'organe d'entrée 2 est inversé par rapport à celui de la Figure 1. A partir du côté gauche (côté de la source motrice 6), se trouvent d'abord l'organe de sortie S3, puis le quatrième train épicycloïdal 141, 142, 143, puis le troisième train épicycloïdal 131, 132, 133. Les moyens d'accouplement sélectif sont également dans l'ordre inverse le long de l'axe A2 : on trouve de gauche à droite le frein B1, le frein BR et l'embrayage C4.

Le montage du train TP1 est également inversé, le transfert TR1 est maintenant à droite et les moyens d'accouplement sélectif C6, B2 sont maintenant à gauche.

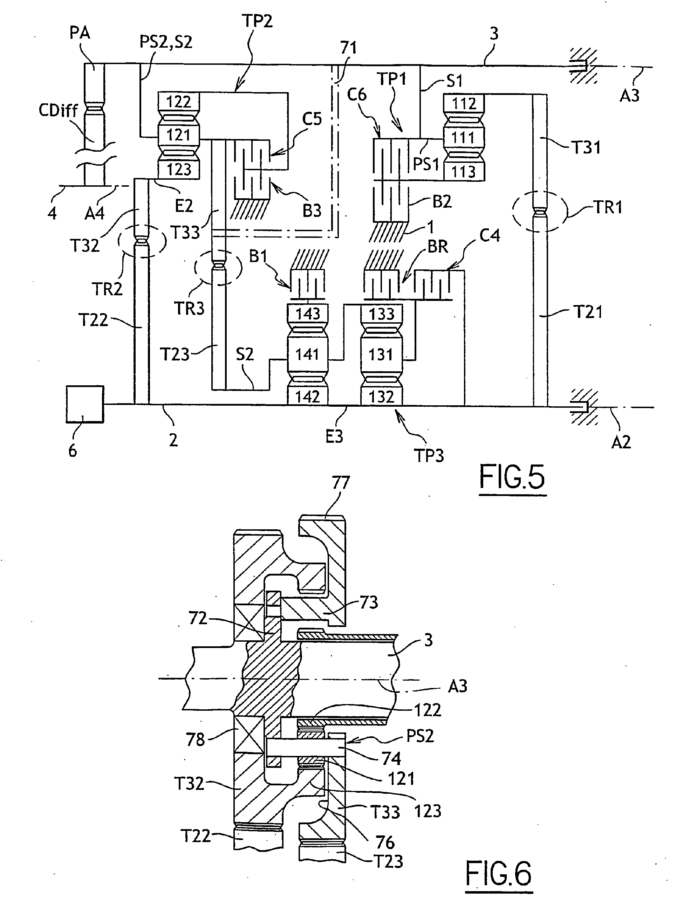

En outre, comme.le montre la figure 5, pour limiter la longueur axiale, les moyens d'accouplement sélectif de chaque train TP1, TP2 sont maintenant l'un autour de l'autre au lieu d'être alignés axialement. Plus précisément, pour chaque train, le frein entoure l'embrayage, voir B3 entourant C5 est B2 entourant C6. L'ensemble des trains planétaires et des organes d'accouplement, ainsi que le transfert TR3, sont logés axialement entre les transferts TR1 et TR2

Les axes A2, A3 et A4 sont aux sommets d'un triangle lorsqu'ils sont vus en bout (non représenté).

La figure 6 montre un mode de réalisation concret dans lequel le porte-satellites PS2 est formé par une collerette 72 de l'arbre 3, et par le pignon de transfert mené T33 fixé rigidement à la collerette 72 par des piliers essentiellement axiaux 73 répartis angulairement autour de l'axe A3. Les piliers alternent circonférentiellement avec des tourillons 74 fixés à la tourillons 74 entre la colorette 72 et le pignon T32. Le pignon T33 est largement évidé dans toute sa région centrale en 76 pour recevoir la couronne 123. Ainsi la denture extérieure 77 du pignon T33, qui engrène avec le pignon de transfert menant T23, est disposée autour du train planétaire TP2, pratiquement sans décalage axial par rapport au train planétaire. La couronne 123 est formée par un collet latéral sur le pignon de transfert mené T32, supporté rotatif sur l'arbre intermédiaire 3 grâce à un palier 78 adossé à la colorette 72.

Le fonctionnement du mode de réalisation des Figures 5 et 6 est sensiblement le même que celui du mode de réalisation des Figure 1 et 2. En particulier, chaque rapport est obtenu en activant le même moyen d'accouplement sélectif qu'à la figure 1, respectivement. Lorsque le train TP3 est activé, (B1, BR ou C4 activé), le couple est transmis au pignon d'attaque PA via le porte-satellites PS2 et l'arbre intermédiaire 3. Le porte-satellites PS2 sert donc alors de pièce de transmission entre le pignon de transfert mené T33 et l'arbre intermédiaire 3.

Bien sûr, l'invention n'est pas limitée aux exemples qui viennent d'être décrits et de nombreux aménagements peuvent être apportés à ces exemple sans sortir du cadre de l'invention.

Il serait possible de faire fonctionner l'un au moins des trains épicycloïdaux soit dans un rapport de prise directe locale soit dans un rapport de surmultiplication, par exemple en reliant l'entrée du train à son porte-satellite, tandis que le planétaire et la couronne sont associés l'un à la sortie et l'autre à un frein.

On pourrait de plus imaginer un quatrième mode de réalisation de l'invention, analogue au premier mode de réalisation mais sans le deuxième train planétaire TP2, sans le deuxième transfert par engrenage TR2, sans le deuxième arbre intermédiaire 32, sans la couronne CDiff et sans les pignons de sorties PA1 et PA2. Les rapports fournis par les deux autres trains sont alors choisis en conséquence. Dans le quatrième mode de réalisation, le premier arbre intermédiaire 31 est donc remplacé directement par l'organe rotatif aval 4 solidaire de la roue dentée T33 et autour duquel serait monté le premier train planétaire TP1. Ce mode de réalisation ne nécessite pas d'arbre intermédiaire. D'une manière analogue, on pourrait modifier le troisième mode de réalisation de façon que l'arbre intermédiaire 3 constitue l'organe aval de la boîte de vitesses.

Il est bien clair qu'un dispositif selon l'invention peut aussi être utilisé dans l'autre sens, en surmultiplication, et que les dénominations « amont » et « aval » peuvent être échangées dans d'autres configurations.

Dans le deuxième mode de réalisation, la chaîne T63 peut être remplacée par un pignon intercalaire engrenant avec T23 et avec T53 qui seraient alors des pignons d'engrenage et non plus des pignons à chaîne.

Dans le troisième mode de réalisation, on pourrait modifier l'agencement de diverses manières : on pourrait par exemple disposer le train TP3 comme à la figure 1, avec la sortie S3 à droite et utiliser le porte-satellites PS1 comme pièce de transmission entre le pignon de transfert mené T33 et l'arbre intermédiaire 3. Le transfert TR3 serait alors situé axialement entre d'une part le transfert TR1 et d'autre part les pignons 111, 112, 113.

On pourrait au contraire laisser le train TP3 disposé comme représenté à la figure 5 mais intervertir les trains TP1 et TP2 le long de l'axe A3, de sorte que le porte-satellites PS1 constitue comme dans la variante précédente la pièce de transmission entre T33 et l'arbre 3.

On pourrait encore prévoir deux trains planétaires amont alignés le long de l'axe A2.

## Revendications

1. Dispositif de transmission à rapports multiples, comprenant :
- un bâti (1) ;
- un organe rotatif amont (2) et un organe rotatif aval (4) ;
- un premier train planétaire aval (TP1) et un train planétaire amont (TP3) non coaxiaux et appartenant à deux trajets de puissance (8a ; 8c) différents entre l'organe rotatif amont et l'organe rotatif aval, le premier train planétaire aval étant monté autour d'un axe (A31) d'un premier arbre intermédiaire (31), le train planétaire amont (TP3) étant monté autour de l'axe (A2) de l'organe rotatif amont (2) ;
- un premier transfert par engrenage amont (TR1), interposé entre l'organe rotatif amont (2) et le premier train planétaire aval (TP1)
- un transfert par engrenage aval (TR3) interposé entre le train planétaire amont (TP3) et l'organe rotatif aval (4) ; et
- des moyens d'accouplement sélectif (B1 à B3, BR, C4 à C6) pour faire fonctionner sélectivement chaque train planétaire en prise directe locale ou selon au moins un rapport de transmission différent ;
le dispositif comprenant en outre entre l'organe rotatif amont (2) et l'organe rotatif aval (4) au moins un troisième trajet de puissance (8c) comprenant un deuxième train planétaire aval (TP2) monté autour d'un axe (A32) d'un deuxième arbre intermédiaire (32) différent de ceux (A31, A2) du premier train planétaire aval (TP1) et du train planétaire amont (TP3), le deuxième train planétaire aval (TP2) étant monté fonctionnellement en série avec un deuxième transfert par engrenage amont (TR2) définissant entre l'organe rotatif amont (2) et l'organe rotatif aval (4), lorsque le deuxième train planétaire aval (TP2) est dans un état de prise directe locale, un rapport de transmission différent de chacun de ceux définis par les deux transferts par engrenage (TR1, TR3) précités lorsque leur train planétaire respectif (TP1, TP3) est en état de prise directe locale, le premier et le deuxième train planétaire aval étant reliés, au moins de façon indirecte, respectivement au premier et au second arbre intermédiaire, les premier et second arbres intermédiaires étant reliés à l'organe rotatif aval (4) par engrènement (PA1, PA2), **caractérisé en ce que** le transfert aval (TR3) comprend une roue dentée menée (T33) solidaire en rotation du premier arbre intermédiaire (31).

2. Dispositif selon la revendication 1, **caractérisé en ce qu'**au moins un des transferts (TR1, TR2) est placé axialement entre au moins un des trains planétaires (TP1, TP2, TP3) et une extrémité de raccordement mécanique (5) de l'organe amont (2) avec une source motrice (6).

3. Dispositif selon la revendication 1 ou 2, **caractérisé en ce que** le premier transfert amont (TR1) et le transfert aval (TR3) sont disposés dans deux plans perpendiculaires à l'axe (A2) de l'organe rotatif amont, et le premier train planétaire aval (TP1) et le train planétaire amont (TP3) sont logés spatialement entre ces deux plans.

4. Dispositif selon l'une des revendications 1 à 3, **caractérisé en ce que** le premier transfert amont (TR1) comprend une roue dentée menante (T22) solidaire en rotation de l'organe rotatif amont (2).

5. Dispositif de transmission selon l'une des revendications 1 à 4, **caractérisé en ce que** les trains planétaires (TP1, TP2, TP3) sont montés axialement entre les transferts par engrenage amont (TR1, TR2) et aval (TR3).

6. Dispositif selon l'une des revendications 1 à 5, **caractérisé en ce que** le premier arbre intermédiaire (31) et le deuxième arbre intermédiaire (32) comprennent chacun un pignon (PA1, PA2) monté suivant l'axe respectif (A31, A32) de l'arbre intermédiaire (31, 32), les pignons engrenant avec une même roue dentée (CDiff) sur l'organe rotatif aval (4).

7. Dispositif selon l'une des revendications 1 à 6, **caractérisé en ce que** le premier transfert amont (TR1) et le deuxième transfert amont (TR2) comprennent une roue dentée commune (T21, T22) sur l'organe rotatif amont (2), engrenant avec deux pignons menés (T31, T32) montés chacun suivant l'un respectif des axes (A31, A32) des premier et deuxième trains planétaires aval (TP1, TP2).

8. Dispositif selon la revendication 7, **caractérisé en ce que** la roue dentée commune comprend deux dentures de diamètres différents engrenant chacune avec l'un respectif des deux pignons menés (T31, T32).

9. Dispositif selon l'une des revendications 1 à 8, **caractérisé en ce que** le deuxième transfert amont (TR2) et l'un parmi le premier transfert amont (TR1) et le transfert aval (TR3) sont disposés dans deux plans perpendiculaires à l'axe (A2) de l'organe rotatif amont, et le deuxième train planétaire aval (TP2) est logé spatialement entre ces deux plans.

10. Dispositif selon l'une des revendications 1 à 9, **caractérisé en ce que** les trois trains planétaires comprennent :
- un train planétaire (TP1), de préférence aval, dont l'entrée (E1) est reliée à un planétaire (112) et la sortie (S1) est reliée à un porte-satellites (PS1), ce train étant capable d'une prise directe locale pour réaliser un sixième rapport, et d'une démultiplication par blocage d'une couronne (113) pour réaliser un deuxième rapport;
- un autre train planétaire (TP2), de préférence aval, dont l'entrée (E2) est reliée à une couronne (123) et la sortie (S2) est reliée à un porte-satellites (PS2), ce train étant capable d'une prise directe locale pour réaliser un cinquième rapport, et d'une démultiplication par blocage d'un planétaire (122) pour réaliser un troisième rapport ; et
- encore un autre train planétaire (TP3), de préférence amont, dont l'entrée (E3) est reliée à un planétaire (142) et la sortie (S3) est reliée à un porte-satellites (PS4), cet autre train étant capable d'une prise directe locale pour réaliser un quatrième rapport, et d'une démultiplication par blocage d'une couronne (143) pour réaliser un premier rapport ;
les rapports étant de plus en plus longs du premier au sixième rapport.

11. Dispositif selon l'une des revendications 1 à 10, **caractérisé en ce que** l'un (TP3) des trains planétaires comprend au moins deux trains épicycloïdaux ayant une entrée commune (E3) et une sortie commune (S3).

12. Dispositif selon la revendication 11, **caractérisé en ce qu'**un premier (131 à 133) de ces trains épicycloïdaux possède un porte-satellites (PS3) libre par rapport à l'entrée commune (E3) et à la sortie commune (S3) et pouvant être immobilisé par rapport au bâti au moyen de l'un des moyens d'accouplement sélectif (BR) pour réaliser une marche arrière,
un deuxième (141 à 143) de ces trains épicycloïdaux ayant un porte-satellites (PS4) relié de façon permanente à l'une (S3) desdites entrée et sortie communes,
ledit un des trains planétaires pouvant réaliser en plus de la marche arrière deux rapports de marche avant, chacun par activation de l'un respectif (B1, C4) des moyens d'accouplement sélectif.

13. Dispositif selon la revendication 12, **caractérisé en ce que** ledit un des trains planétaires est le train planétaire amont (TP3), les premier et second trains épicycloïdaux ayant des planétaires (132, 142) reliés à l'entrée commune (E3) et solidaires de l'organe rotatif amont (2), le porte-satellites (PS4) du second train épicycloïdal étant relié de façon permanente avec la sortie commune (S3) et avec une couronne (133) du premier train épicycloïdal.

14. Dispositif selon l'une des revendications 1 à 11, **caractérisé en ce que** l'un des trains planétaires comprend un planétaire (131) relié à l'entrée (E3), une couronne (133) reliée à la sortie (S3), et un porte-satellites (PS3) pouvant être sélectivement bloqué pour réaliser un rapport de marche arrière.

15. Dispositif selon l'une des revendications 1 à 14, **caractérisé en ce que** les axes de deux des trains planétaires sont sensiblement parallèles, et **en ce que** ces deux trains planétaires sont alignés entre eux sensiblement perpendiculairement à leurs axes.

16. Dispositif selon l'une des revendications 1 à 15, **caractérisé en ce que** l'un au moins des trains planétaires (TP1 ; TP2 ; TP3) comprend un train épicycloïdal comprenant :
- un porte-satellites (PS1 ;PS4 ; PS3) relié de façon permanente, au moins indirecte, à un premier (4) des organes rotatifs amont et aval, et pouvant être sélectivement relié, de façon au moins indirecte, au second (2) desdits organes rotatifs amont et aval par un (C6 ; C4 ; C5) des moyens d'accouplement sélectif, créant ainsi une prise directe locale ;
- un planétaire (112 ; 122 ; 142) et une couronne (113; 123 ; 143) dont l'un (112 ; 123; 142) est relié de façon permanente audit second (2) organe rotatif ; et dont l'autre (113 ; 122 ; 143) peut être relié sélectivement au bâti (1) par l'un (B2 ; B1 ; B3) des moyens d'accouplement sélectif.

17. Dispositif selon l'une des revendications 1 à 16, **caractérisé en ce que** chaque rapport de transmission est réalisé par fermeture d'un seul moyen d'accouplement sélectif de l'un des trains planétaires (TP1, TP2, TP3) et mise ou maintien à l'état ouvert des autres moyens d'accouplement sélectif du dispositif de transmission.

18. Dispositif selon l'une des revendications 1 à 17, **caractérisé en ce que** les moyens d'accouplement sélectif (B1 à B3, C4 à C6, BR) sont du type progressif et capables d'assurer l'adaptation progressive entre la vitesse de rotation d'un moteur de véhicule et la vitesse du véhicule, en particulier pour la mise en mouvement du véhicule à partir de l'arrêt par l'un au moins des moyens d'accouplement sélectif.

19. Dispositif selon l'une des revendications 1 à 18, **caractérisé en ce que** les trains planétaires (TP1 à TP3) et les transferts (TR1 à TR3) sont en engrènement permanent.

20. Dispositif selon l'une des revendications 1 à 19, **caractérisé en ce que** le plus court des rapports obtenus par des prises directes locales (C4, C5, C6) est plus long que le plus long des rapports obtenus par accouplement sélectif (BR, B1, B2, B3) entre le bâti (1) et un élément d'un train planétaire.

## Claims

1. Multiple-ratio transmission device, comprising:
- a frame (1);
- an upstream rotary member (2) and a downstream rotary member (4);
- a first downstream planetary gear train (TP1) and an upstream planetary gear train (TP3) which are non-coaxial and belong to two different power paths (8a; 8c) between the upstream rotary member and the downstream rotary member, the first downstream planetary gear train being mounted about an axis (A31) of a first intermediate shaft (31), the upstream planetary gear train (TP3) being mounted about the axis (A2) of the upstream rotary member (2);
- an upstream gear transfer element (TR1), interposed between the upstream rotary member (2) and the first downstream planetary gear train (TP1);
- a downstream gear transfer element (TR3) interposed between the upstream planetary gear train (TP3) and the downstream rotary member (4); and
- selective coupling means (B1 to B3, BR, C4 to C6) for selectively operating each planetary gear train in local direct drive or in at least one different transmission ratio;
the device further comprising, between the upstream rotary member (2) and the downstream rotary member (4), at least a third power path (8c) comprising a second downstream planetary gear train (TP2) mounted about an axis (A32) of a second intermediate shaft (32), different from those (A31, A2) of the first downstream planetary gear train (TP1) and of the upstream planetary gear train (TP3), the second downstream planetary gear train (TP2) being mounted functionally in series with a second upstream gear transfer element (TR2) defining, between the upstream rotary member (2) and the downstream rotary member (4), when the second downstream planetary gear train (TP2) is in a state of local direct drive, a transmission ratio different from each of those defined by the two above-mentioned gear transfer elements (TR1, TR3) when their respective planetary gear train (TP1, TP3) is in a state of local direct drive, the first and second downstream planetary gear trains being connected, at least indirectly, to the first and second intermediate shafts respectively, the first and second intermediate shafts being connected to the downstream rotary member (4) by meshing (PA1, PA2), **characterised in that** the downstream transfer element (TR3) comprises a driven gear wheel (T33) which is non-rotatably connected to the first intermediate shaft (31).

2. Device according to claim 1, **characterised in that** at least one of the transfer elements (TR1, TR2) is placed axially between at least one of the planetary gear trains (TP1, TP2, TP3) and an end of a mechanical connection (5) between the upstream member (2) and a driving source (6).

3. Device according to either claim 1 or claim 2, **characterised in that** the first upstream transfer element (TR1) and the downstream transfer element (TR3) are arranged in two planes perpendicular to the axis (A2) of the upstream rotary member, and the first downstream planetary gear train (TP1) and the upstream planetary gear train (TP3) are accommodated spatially between these two planes.

4. Device according to any one of claims 1 to 3, **characterised in that** the first upstream transfer element (TR1) comprises a driving gear wheel (T22) which is non-rotatably connected to the upstream rotary member (2).

5. Device according to any one of claims 1 to 4, **characterised in that** the planetary gear trains (TP1, TP2, TP3) are mounted axially between the upstream (TR1, TR2) and downstream (TR3) gear transfer elements.

6. Device according to any one of claims 1 to 5, **characterised in that** the first intermediate shaft (31) and the second intermediate shaft (32) each comprise a pinion (PA1, PA2) mounted along the respective axis (A31, A32) of the intermediate shaft (31, 32), the pinions meshing with the same gear wheel (CDiff) on the downstream rotary member (4).

7. Device according to any one of claims 1 to 6, **characterised in that** the first upstream transfer element (TR1) and the second upstream transfer element (TR2) comprise a common gear wheel (T21, T22) on the upstream rotary member (2), meshing with two driven pinions (T31, T32) each mounted along a respective one of the axes (A31, A32) of the first and second downstream planetary gear trains (TP1, TP2).

8. Device according to claim 7, **characterised in that** the common gear wheel comprises two teeth of different diameters, each meshing with a respective one of the two driven pinions (T31, T32).

9. Device according to any one of claims 1 to 8, **characterised in that** the second upstream transfer element (TR2) and one of the first upstream transfer element (TR1) and the downstream transfer element (TR3) are arranged in two planes perpendicular to the axis (A2) of the upstream rotary member, and the second downstream planetary gear train (TP2) is accommodated spatially between these two planes.

10. Device according to any one of claims 1 to 9, **characterised in that** the three planetary gear trains comprise:
- a planetary gear train (TP1), preferably downstream, the input (E1) of which is connected to a sun gear (112) and the output (S1) of which is connected to a planet carrier (PS1), this gear train being capable of a local direct drive for producing a sixth ratio, and of a gear reduction by locking a ring gear (113) for producing a second ratio;
- another planetary gear train (TP2), preferably downstream, the input (E2) of which is connected to a ring gear (123) and the output (S2) of which is connected to a planet carrier (PS2), this gear train being capable of a local direct drive for producing a fifth ratio, and of a gear reduction by locking a sun gear (122) for producing a third ratio; and
- yet another planetary gear train (TP3), preferably upstream, the input (E3) of which is connected to a sun gear (142) and the output (S3) of which is connected to a planet carrier (PS4), this other gear train being capable of a local direct drive for producing a fourth ratio, and of a gear reduction by locking a ring gear (143) for producing a first ratio;
the ratios increasing in length from the first to the sixth ratio.

11. Device according to any one of claims 1 to 10, **characterised in that** one (TP3) of the planetary gear trains comprises at least two epicyclic gear trains having a common input (E3) and a common output (S3).

12. Device according to claim 11, **characterised in that** a first (131 to 133) of these epicyclic gear trains has a planet carrier (PS3) which is free in relation to the common input (E3) and to the common output (S3) and can be immobilised in relation to the frame by means of one of the selective coupling means (BR) for producing a reverse gear,
a second (141 to 143) of these epicyclic gear trains having a planet carrier (PS4) which is permanently connected to one (S3) of said common input and output,
said one of the planetary gears being able also to produce, in addition to the reverse gear, two forward gear ratios, each by activating a respective one (B1, C4) of the selective coupling means.

13. Device according to claim 12, **characterised in that** said one of the planetary gear trains is the upstream planetary gear train (TP3), the first and second epicyclic gear trains having sun gears (132, 142) which are connected to the common input (E3) and connected to the upstream rotary member (2), the planet carrier (PS4) of the second epicyclic gear train being permanently connected to the common output (S3) and to a ring gear (133) of the first epicyclic gear train.

14. Device according to any one of claims 1 to 11, **characterised in that** one of the planetary gear trains comprises a sun gear (131) which is connected to the input (E3), a ring gear (133) which is connected to the output (S3), and a planet carrier (PS3) which can be locked selectively for producing a reverse gear ratio.

15. Device according to any one of claims 1 to 14, **characterised in that** the axes of two of the planetary gear trains are substantially parallel, and **in that** these two planetary gear trains are aligned with one another substantially perpendicular to their axes.

16. Device according to any one of claims 1 to 15, **characterised in that** at least one of the planetary gear trains (TP1; TP2; TP3) comprises an epicyclic gear train comprising:
- a planet carrier (PS1; PS4; PS3) which is permanently connected, at least indirectly, to a first (4) of the upstream and downstream rotary members and can selectively be connected, at least indirectly, to the second (2) of said upstream and downstream rotary members by one (C6; C4; C5) of the selective coupling means, thus creating a local direct drive;
- a sun gear (112; 122; 142) and a ring gear (113; 123; 143), one (112; 123; 142) of which is permanently connected to said second (2) rotary member; and the other (113; 122; 143) of which can selectively be connected to the frame (1) by one (B2; B1; B3) of the selective coupling means.

17. Device according to any one of claims 1 to 16, **characterised in that** each transmission ratio is produced by closing a single selective coupling means of one of the planetary gear trains (TP1, TP2, TP3) and opening or keeping open the other selective coupling means of the transmission device.

18. Device according to any one of claims 1 to 17, **characterised in that** the selective coupling means (B1 to B3, C4 to C6, BR) are of the progressive type and capable of providing progressive adaptation between the rotational speed of a vehicle engine and the speed of the vehicle, in particular for causing the vehicle to start moving from a stationary position by at least one of the selective coupling means.

19. Device according to any one of claims 1 to 18, **characterised in that** the planetary gear trains (TP1 to TP3) and the transfer elements (TR1 to TR3) are permanently meshed.

20. Device according to any one of claims 1 to 19, **characterised in that** the shortest of the ratios obtained by local direct drives (C4, C5, C6) is longer than the longest of the ratios obtained by selective coupling (BR, B1, B2, B3) between the frame (1) and an element of a planetary gear train.

## Patentansprüche

1. Mehrganggetriebevorrichtung umfassend
- ein Gestell (1);
- ein vorgeschaltetes drehbares Organ (2) und ein nachgeschaltetes drehbares Organ (4);
- einen ersten nachgeschalteten Planetensatz (TP1) und einen vorgeschalteten Planetensatz (TP3), die nicht koaxial sind und zwei verschiedenen Kraftwegen (8a; 8c) zwischen dem vorgeschalteten drehbaren Organ und dem nachgeschalteten drehbaren Organ zugehörig sind, wobei der erste nachgeschaltete Planetensatz um eine Achse (A31) einer ersten Zwischenwelle (31) montiert ist, wobei der vorgeschaltete Planetensatz (TP3) um die Achse (A2) des vorgeschalteten drehbaren Organs (2) montiert ist;
- ein erstes vorgeschaltetes Zahnradgetriebe (TR1), das zwischen dem vorgeschalteten drehbaren Organ (2) und dem ersten nachgeschalteten Planetensatz (TP1) eingefügt ist;
- ein nachgeschaltetes Zahnradgetriebe (TR3), das zwischen dem vorgeschalteten Planetensatz (TP3) und dem nachgeschalteten drehbaren Organ (4) eingefügt ist;
- selektive Kupplungsmittel (B1 bis B3, BR, C4 bis C6), um jeden Planetensatz selektiv in lokalem direktem Eingriff oder mit zumindest einem abweichenden Übertragungsverhältnis betreiben zu lassen;
wobei die Vorrichtung ferner zwischen dem vorgeschalteten drehbaren Organ (2) und dem nachgeschalteten drehbaren Organ (4) mindestens einen dritten Kraftweg (8c) umfasst, der einen zweiten nachgeschalteten Planetensatz (TP2) umfasst, der um eine Achse (A32) einer zweiten Zwischenwelle (32) montiert ist, die sich von denen (A31, A2) des ersten nachgeschalteten Planentensatzes (TP1) und des vorgeschalteten Planetensatzes (TP3) unterscheidet, wobei der zweite nachgeschaltete Planetensatz (TP2) betriebsmäßig in Reihe mit einem zweiten vorgeschalteten Zahnradgetriebe (TR2) montiert ist, das, wenn der zweite nachgeschaltete Planetensatz (TP2) in einem Zustand des lokalen direkten Eingriffs ist, zwischen dem vorgeschalteten drehbaren Organ (2) und dem nachgeschalteten drehbaren Organ (4) ein Übertragungsverhältnis festlegt, das von jedem der durch die zwei oben genannten Zahnradgetriebe (TR1, TR3) festgelegten abweicht, wenn ihr jeweiliger Planetensatz (TP1, TP3) in einem Zustand des lokalen direkten Eingriffs ist, wobei der erste und der zweite nachgeschaltete Planetensatz zumindest indirekt mit der ersten bzw. der zweiten Zwischenwelle verbunden sind, wobei die erste und die zweite Zwischenwelle in kämmender Verbindung mit dem nachgeschalteten drehbaren Organ (4) steht, **dadurch gekennzeichnet, dass** das nachgeschaltete Getriebe (TR3) ein Abtriebszahnrad (T33) umfasst, das mit der ersten Zwischenwelle (31) drehfest verbunden ist.

2. Vorrichtung nach Anspruch 1, **dadurch gekennzeichnet, dass** mindestens eines der Getriebe (TR1, TR2) in axialer Richtung zwischen mindestens einem der Planentensätze (TP1, TP2, TP3) und einem Ende für die mechanische Verbindung (5) des vorgeschalteten Organs (2) mit einer Antriebsquelle (6) angeordnet ist.

3. Vorrichtung nach Anspruch 1 oder 2, **dadurch gekennzeichnet, dass** das erste vorgeschaltete Getriebe (TR1) und das nachgeschaltete Getriebe (TR3) in zwei Ebenen angeordnet sind, die zur Achse (A2) des vorgeschalteten drehbaren Organs senkrecht sind, und der erste nachgeschaltete Planetensatz (TP1) und der vorgeschaltete Planetensatz (TP3) räumlich zwischen diesen zwei Ebenen angeordnet sind.

4. Vorrichtung nach einem der Ansprüche 1 bis 3, **dadurch gekennzeichnet, dass** das erste vorgeschaltete Getriebe (TR1) ein Antriebszahnrad (T22) umfasst, das mit dem vorgeschalteten drehbaren Organ (2) drehfest verbunden ist.

5. Getriebevorrichtung nach einem der Ansprüche 1 bis 4, **dadurch gekennzeichnet, dass** die Planetensätze (TP1, TP2, TP3) in axialer Richtung zwischen den vorgeschalteten Zahnradgetrieben (TR1, TR2) und dem nachgeschalteten Zahnradgetriebe (TR3) angeordnet sind.

6. Vorrichtung nach einem der Ansprüche 1 bis 5, **dadurch gekennzeichnet, dass** die erste Zwischenwelle (31) und die zweite Zwischenwelle (32) jeweils ein Ritzel (PA1, PA2) umfassen, das entlang der jeweiligen Achse (A31, A32) der Zwischenwelle (31, 32) montiert ist, wobei die Ritzel mit ein und demselben Zahnrad (CDiff an dem nachgeschalteten drehbaren Organ (4) im Eingriff ist.

7. Vorrichtung nach einem der Ansprüche 1 bis 6, **dadurch gekennzeichnet, dass** das erste vorgeschaltete Getriebe (TR1) und das zweite vorgeschaltete Getriebe (TR2) ein gemeinsames Zahnrad (T21, T22) an dem vorgeschalteten drehbaren Organ (2) aufweisen, das mit zwei Abtriebsritzeln (T31, T32) im Eingriff sind, die jeweils entlang einer der Achsen (A31, A32) des ersten bzw. zweiten nachgeschalteten Planetensatzes (TP1, TP2) montiert sind.

8. Vorrichtung nach Anspruch 7, **dadurch gekennzeichnet, dass** das gemeinsame Zahnrad zwei Zahnungen mit unterschiedlichen Durchmessern umfasst, die jeweils mit einem der zwei Abtriebsritzel (T31, T32) im Eingriff sind.

9. Vorrichtung nach einem der Ansprüche 1 bis 8, **dadurch gekennzeichnet, dass** das zweite vorgeschaltete Getriebe (TR2) und eines von dem ersten vorgeschalteten Getriebe (TR1) und dem nachgeschalteten Getriebe (TR3) in zwei Ebenen angeordnet sind, die zur Achse (A2) des vorgeschalteten drehbaren Organs senkrecht sind, und der zweite nachgeschaltete Planetensatz (TP2) räumlich zwischen diesen zwei Ebenen angeordnet ist.

10. Vorrichtung nach einem der Ansprüche 1 bis 9, **dadurch gekennzeichnet, dass** die drei Planetensätze Folgendes umfassen:
- einen vorzugsweise nachgeschalteten Planetensatz (TP1), dessen Antrieb (E1) mit einem Sonnenrad (112) und dessen Abtrieb (S1) mit einem Planetensteg (PS1) verbunden ist, wobei dieser Satz in der Lage ist zu einem lokalen direkten Eingriff, um einen sechsten Gang darzustellen, und zu einer Untersetzung durch Blockieren eines Hohlrads (113), um einen zweiten Gang darzustellen;
- einen weiteren, vorzugsweise nachgeschalteten Planetensatz (TP2), dessen Antrieb (E2) mit einem Hohlrad (123) und dessen Abtrieb (S2) mit einem Planetensteg (PS2) verbunden ist, wobei dieser Satz in der Lage ist zu einem lokalen direkten Eingriff, um einen fünften Gang darzustellen, und zu einer Untersetzung durch Blockieren eines Sonnenrads (122), um einen dritten Gang darzustellen; und
- einen noch weiteren, vorzugsweise vorgeschalteten Planetensatz (TP3), dessen Antrieb (E3) mit einem Sonnenrad (142) und dessen Abtrieb (S3) mit einem Planetensteg (PS4) verbunden ist, wobei dieser weitere Satz in der Lage ist zu einem lokalen direkten Eingriff, um einen vierten Gang darzustellen, und zu einer Untersetzung durch Blockieren eines Hohlrads (143), um einen ersten Gang darzustellen;
wobei die Gänge vom ersten zum sechsten Gang immer länger sind.

11. Vorrichtung nach einem der Ansprüche 1 bis 10, **dadurch gekennzeichnet, dass** einer (TP3) der Planetensätze mindestens zwei Planetenradsätze umfasst mit einem gemeinsamen Antrieb (E3) und einem gemeinsamen Abtrieb (S3).

12. Vorrichtung nach Anspruch 11, **dadurch gekennzeichnet, dass** ein erster (131 bis 133) dieser Planetenradsätze einen Planetensteg (PS3) aufweist, der relativ zum gemeinsamen Antrieb (E3) und dem gemeinsamen Abtrieb (S3) frei ist und relativ zum Gestell in seiner Bewegung mittels eines der selektiven Kupplungsmittel (BR) gesperrt werden kann, um einen Rückwärtsgang darzustellen,
ein zweiter (141 bis 143) dieser Planetenradsätze einen Planetensteg (PS4) aufweist, der permanent mit einem (S3) der gemeinsamen Antriebe und Abtriebe verbunden ist,
wobei einer dieser Planetensätze außer dem Rückwärtsgang zwei Vorwärtsgänge, jeweils durch Aktivierung jeweils eines (B1, C4) der selektiven Kupplungsmittel, darstellen kann.

13. Vorrichtung nach Anspruch 12, **dadurch gekennzeichnet, dass** der eine der Planetensätze der vorgeschaltete Planetensatz (TP3) ist, wobei der erste und der zweite Planetenradsatz Sonnenräder (132, 142) aufweisen, die mit dem gemeinsamen Antrieb (E3) verbunden und fest mit dem vorgeschalteten drehbaren Organ (2) verbunden sind, wobei der Planetensteg (PS4) des zweiten Planetenradsatzes permanent mit dem gemeinsamen Abtrieb (S3) und mit einem Hohlrad (133) des ersten Planetenradsatzes verbunden ist.

14. Vorrichtung nach einem der Ansprüche 1 bis 11, **dadurch gekennzeichnet, dass** einer der Planetensätze ein Sonnenrad (131), das mit dem Antrieb (E3) verbunden ist, ein Hohlrad (133), das mit dem Abtrieb (S3) verbunden ist, und einen Planetensteg (PS3) umfasst, der selektiv blockiert werden kann, um einen Rückwärtsgang darzustellen.

15. Vorrichtung nach einem der Ansprüche 1 bis 14, **dadurch gekennzeichnet, dass** die Achsen von zwei der Planetensätze im Wesentlichen parallel sind und dass diese zwei Planetensätze im Wesentlichen senkrecht zu ihren Achsen miteinander fluchten.

16. Vorrichtung nach einem der Ansprüche 1 bis 15, **dadurch gekennzeichnet, dass** zumindest einer der Planetensätze (TP1; TP2; TP3) einen Planetenradsatz umfasst mit
- einem Planetensteg (PS1; PS4; PS3), der zumindest indirekt permanent mit einem (4) der vorgeschalteten und nachgeschalteten drehbaren Organe verbunden ist und zumindest indirekt selektiv mit dem zweiten (2) der vorgeschalteten und nachgeschalteten drehbaren Organe durch eines (C6; C4; C5) der selektiven Kupplungsmittel verbunden werden kann, wodurch ein lokaler direkter Eingriff bewirkt wird;
- einem Sonnenrad (112; 122; 142) und einem Hohlrad (113; 123; 143), wovon das eine (112; 123; 142) permanent mit dem zweiten (2) drehbaren Organ verbunden ist und wovon das andere (113; 122; 143) selektiv mit dem Gestell (1) durch eines (B2; B1; B3) der selektiven Kupplungsmittel verbunden werden kann.

17. Vorrichtung nach einem der Ansprüche 1 bis 16, **dadurch gekennzeichnet, dass** jedes der Übertragungsverhältnisse durch Schließen eines einzigen selektiven Kupplungsmittels eines der Planetensätze (TP1, TP2, TP3) und durch Herbeiführung oder Beibehaltung des geöffneten Zustands der anderen selektiven Kupplungsmittel der Getriebevorrichtung dargestellt wird.

18. Vorrichtung nach einem der Ansprüche 1 bis 17, **dadurch gekennzeichnet, dass** die selektiven Kupplungsmittel (B1 bis B3, C4 bis C6, BR) des progressiven Typs sind und dafür geeignet sind, die progressive Anpassung zwischen der Drehzahl des Fahrzeugmotors und der Fahrzeuggeschwindigkeit sicherzustellen, insbesondere, um das Fahrzeug aus dem Stand durch mindestens eines der selektiven Kupplungsmittel in Bewegung zu setzen.

19. Vorrichtung nach einem der Ansprüche 1 bis 18, **dadurch gekennzeichnet, dass** die Planetensätze (TP1 bis TP3) und die Getriebe (TR1 bis TR3) in ständigem Eingriff sind.

20. Vorrichtung nach einem der Ansprüche 1 bis 19, **dadurch gekennzeichnet, dass** der kürzeste der Gänge, die durch lokale direkte Eingriffe (C4, C5, C6) erhalten sind, länger als der längste der Gänge ist, die durch selektive Kupplung (BR, B1, B2, B3) zwischen dem Gestell (1) und einem Element eines Planetensatzes erhalten sind.
